# EUROPÄISCHE PATENTSCHRIFT

(11) **EP 0 818 606 B1**
(45) Veröffentlichungstag und Bekanntmachung des Hinweises auf die Patenterteilung: **14.11.2001**
(21) Anmeldenummer: 97107294.7
(22) Anmeldetag: 02.05.1997
(51) Int. Cl.: F01D 5/28, F01D 5/00

(54) **Schaufel für Strömungsmaschine mit metallischer Deckschicht**
Fluid flow machine blade with a metallic coating
Aube pour turbomachine pourvue d'un revêtement métallique

(30) Priorität: 11.07.1996 DE 19627860
(43) Veröffentlichungstag der Anmeldung: 14.01.1998
(73) Patentinhaber: MTU Aero Engines GmbH, 80995 München (DE)
(72) Erfinder: Sikorski, Siegfried, 80997 München (DE); Schober, Michael, 80999 München (DE); Schönacher, Reinhold, 80999 München (DE)
(74) Vertreter: Einsele, Rolf W.

(56) Entgegenhaltungen:
- EP-A- 0 526 057
- EP-A- 0 596 386
- WO-A-96/00842
- FR-A- 2 303 089
- FR-A- 2 375 441
- US-A- 3 966 353

## Beschreibung

Die Erfindung betrifft eine Schaufel für eine Strömungsmaschine nach dem Oberbegriff des Patentanspruches 1 sowie ein Verfahren zur Herstellung und Reparatur einer Schaufel gemäß den Oberbegriffen der Patentansprüche 10 bzw. 12.

Bauteile und insbesondere Schaufeln aus faserverstärktem Verbundwerkstoff die der Fluidströmung von Strömungsmaschinen ausgesetzt sind, sind durch abrasive Partikel im Fluidstrom und durch thermische Beanspruchung erosionsgefährdet. Zum Schutz von Triebwerksbauteilen wird in der DE-OS 43 43 904 vorgeschlagen, eine erosionsbeständige, anorganische Lackschicht auf das Bauteil aufzutragen. Das Verfahren hat den Vorteil, dass die Lackschicht relativ einfach auch im Reparaturverfahren auf die Bauteile aufgebracht und eingebrannt werden kann. Problematisch ist jedoch deren Haftbeständigkeit auf den Bauteilen, so dass ein wiederholtes Auftragen der Lackschicht während der Bauteillaufzeit erforderlich sein kann.

Alternativ hierzu ist in der DE-PS 42 08 842 ein Erosionsschutz für Hubschrauberrotorblätter aus faserverstärkten Kunststoffmaterialien offenbart, bei welchem das Rotorblatt an den kritischen Stellen mit einem aufgeklebten Blech belegt ist und dieses mit Partikeln aus Metallverbindungen beschichtet ist. Auch hier stellt sich das Problem der Haftbeständigkeit des aufgeklebten Bleches an der darunter liegenden Faserverbundstruktur.

In der DE-PS 26 31 856 wird zum Schutz von Verbundschaufeln gegen starke Aufprallbelastungen ein Vorderkantenschutz vorgeschlagen, welcher aus einem Drahtgeflecht besteht, das im Faserverbund der Schaufelhauptstruktur verankert ist. Da derartige Drahtgeflechte aufgrund des Mindestdurchmessers von Drähten relativ grobmaschig ausfallen, liegt die Stärke dieser Lösung auf dem Schutz vor größeren Fremdkörpern, wie beispielsweise Vögeln. Als Schutz vor Erosion durch Sand beispielsweise ist diese Lösung weniger gut geeignet.

Ein weiterer Schutz für Vorderkanten von Verbundschaufeln ist in der US 3 762 835 offenbart, die sich auf einen Fremdkörperschutz für Kompressorschaufeln bezieht.

Dort wird bei einer Faserverbund-Kompressorschaufel eine unter der Oberfläche liegende Schicht aus Feindrahtnetz um die Vorderkante herum angeordnet. Diese unter der Oberfläche liegende Schicht ist mit Nickel überzogen und bildet einen Schutz gegen eine Aufprallbeschädigung durch große und kleine Fremdkörper, wie Steine und Sand. Wenn die unter der Oberfläche liegende Netz- bzw. Geflechtschicht durch ein nicht gleitendes Klebemittel festgelegt wird, wird der Klebstoff in den Zwischenräumen des Netzes bzw. Geflechtes mit Silber beschichtet und das Mittel durch Atombindung mit den Knötchen des einen metallischen Streifen bildenden Netzes bzw. Geflechtes verbunden.

Es wurde jedoch festgestellt, dass in einigen Fällen, bei denen der Fremdkörper-Vorderkantenschutz einen derartigen, um die Vorderkante der Gebläseschaufel geschlungenen metallischen Streifen aufweist, dieser Schutz während des Aufprallens von mittelgroßen Vögeln verlorengehen kann infolge einer teilweisen Abblätterung bzw. Ablösung von den Schaufeln. Eine weitere Schädigung der Faserschichten kann dann nicht mehr ausgeschlossen werden.

Hiervon ausgehend ist es Aufgabe der Erfindung, eine gattungsgemäße Schaufel für eine Strömungsmaschine anzugeben, bei welcher eine hohe Erosionsbeständigkeit der Schaufel verbunden mit einer dauerhaften Haftfähigkeit des Erosionsschutzes gewährleistet wird. Desweiteren ist ein gattungsgemäßes Herstell- und Reparaturverfahren für Schaufeln aus faserverstärktem Kunststoff zu benennen, das einen dauerhaften Erosionsschutz für die Schaufel gewährleistet.

Erfindungsgemäß wird die Aufgabe bezüglich der Schaufel durch die kennzeichnenden Merkmale des Patentanspruches 1 gelöst.

Die Erfindung hat den Vorteil, dass durch die Verwendung eines Filzes aus metallischen Fasern oder Fäden als Deckschicht diese zum einen eine hohe Erosionsbeständigkeit aufweist und zum anderen aufgrund der Vielzahl miteinander verbundenen Fasern bzw. Fäden eine Fehlertoleranz aufweist, so dass bei lokaler Beschädigung der Deckschicht eine selbständige Ausbreitung - wie dies beispielsweise bei Blechen und Drahtnetzen der Fall ist - oder ein Ablösen der Deckschicht verhindert werden kann. Die hohe Haftfähigkeit der Deckschicht auf der darunterliegenden Grundschicht wird durch das gemeinsame Kunstharzmittel, das sowohl die Schichten des faserverstärkten Kunststoffes als auch die Deckschicht miteinander verbindet, gewährleistet. Des weiteren ergibt sich aufgrund der elektrischen Leitfähigkeit der metallischen Fasern bzw. Fäden ein Blitzschutz, wie er für Rotorblätter oder Propeller erwünscht ist. Aufgrund der Ausbildung der Deckschicht aus einem Filz aus metallischen Fasern oder Fäden, deren Durchmesser typischerweise im Mikrometerbereich liegt, ergibt sich ein besonders wirkungsvoller Erosionsschutz, insbesondere gegenüber kleinen Partikeln wie Sand. Ein weiterer Vorteil des Filzes ist darin zu sehen, dass der ungerichtete Verbund der Fasern des Filzes ein elastisches Auslenken der von einem Fremdkörper getroffenen Fasern erlaubt, so dass die Gefahr des Faserrisses reduziert ist. Sollte es dennoch zu einem Faserriss kommen, so bleibt die Schädigung lokal begrenzt, da die Faser eines Filzes nicht wie bei einem Gewebe durch die ganze Schicht hindurchläuft sondern von begrenzter Länge ist.

Weiterhin unterscheidet sich der Filz von einem Gewebe durch das Fehlen einer gerichteten Rauhigkeit, die sich zwangsläufig durch die gerichtet verlaufenden Fasern bei Geweben ergibt. Somit unterbleibt ein negativer Einfluß auf die Aerodynamik, wenn unter bestimmten Anströmwinkeln eine gerichtete Rauhigkeit von Nachteil wäre.

Ein solcher Filz kann aus Stahl- oder Nickelfasern, d.h. aus Fasern mit hoher Festigkeit und Erosionsbeständigkeit, aufgebaut sein.

Die Fasern/Fäden der Deckschicht können mit den Verstärkungsfasern des Kunststoffes durch Weben, Knüpfen, Flechten oder ähnlichem verbunden sein.

Der üblicherweise verwendete Faserdurchmesser des metallischen Filzes liegt zwischen 2 und 22 µm, so dass je nach Einsatzbedingung der Strömungsmaschine der Erosionsschutz optimal ausgeführt werden kann. Ebenso kann die Porosität des Filzes an die Einsatzerfordernisse angepasst werden, welche zwischen 70 und 98% variiert werden kann.

Die Deckschicht weist bevorzugt eine Dicke von ca. 0,05 bis 3 mm auf.

Das Kunstharzmittel für die Verbindung der Deckschicht mit dem faserverstärkten Kunststoff kann Mischpolymerisate aus Epoxy-, Phenolharzen oder Polyimiden enthalten.

Weiterhin kann das Schaufelblatt teil- oder vollflächig mit einer zusätzlichen erosionsfesten Schutzschicht überzogen sein, vorzugsweise in Form eines temperaturbeständigen Lackes oder einer thermoplastischen Folie.

Die Aufgabe hinsichtlich des Verfahrens zur Herstellung einer Schaufel wird erfindungsgemäß durch die kennzeichnenden Verfahrensschritte des Patentanspruches 10 gelöst.

Das erfindungsgemäße Verfahren zeichnet sich durch eine hohe Haftfähigkeit der Schutzschicht auf den metallischen Fasern bzw. Fäden bei geringem verfahrenstechnischem Aufwand aus. Durch das Freilegen der obersten Fasern bzw. Fäden durch Partikelstrahlen wird zugleich eine gewisse Oberflächenrauhigkeit erzielt, die die Haftfähigkeit der Schutzschicht auf der Deckschicht erhöht.

Die Aufgabe, ein Reparaturverfahren einer Schaufel anzugeben, wird erfindungsgemäß durch die Verfahrensschritte des Patentanspruches 12 gelöst.

Mit Hilfe des erfindungsgemäßen Reparaturverfahrens ist es möglich, bislang nach dem Stand der Technik als Schichtkörper ausgebildete Schaufeln von Strömungsmaschinen mit einer Deckschicht aus metallischen Fasern oder Fäden zu versehen, so dass deren Erosionsbeständigkeit mit geringem Aufwand wieder hergestellt und verbessert werden kann. Weitere Ausbildungen des Reparaturverfahrens ergeben sich aus den Merkmalen der Patentansprüche 13 und 14.

Eine bevorzugte Ausführungsform der Erfindung bezüglich der Schaufelgestaltung wird nachfolgend unter Bezugnahme auf die beigefügte Zeichnung erläutert. Es zeigt:
Fig. 1 im Längsschnitt die Schaufel einer Strömungsmaschine,
Fig. 2 einen Querschnitt durch das Schaufelblatt der Schaufel nach Fig. 1, und
Fig. 3 das Detail III aus Fig. 2 in vergrößertem Maßstab.

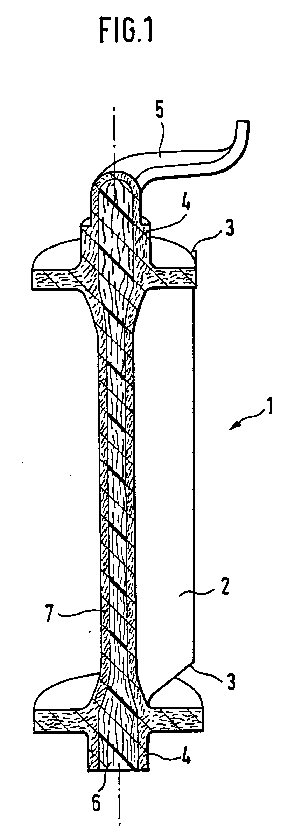

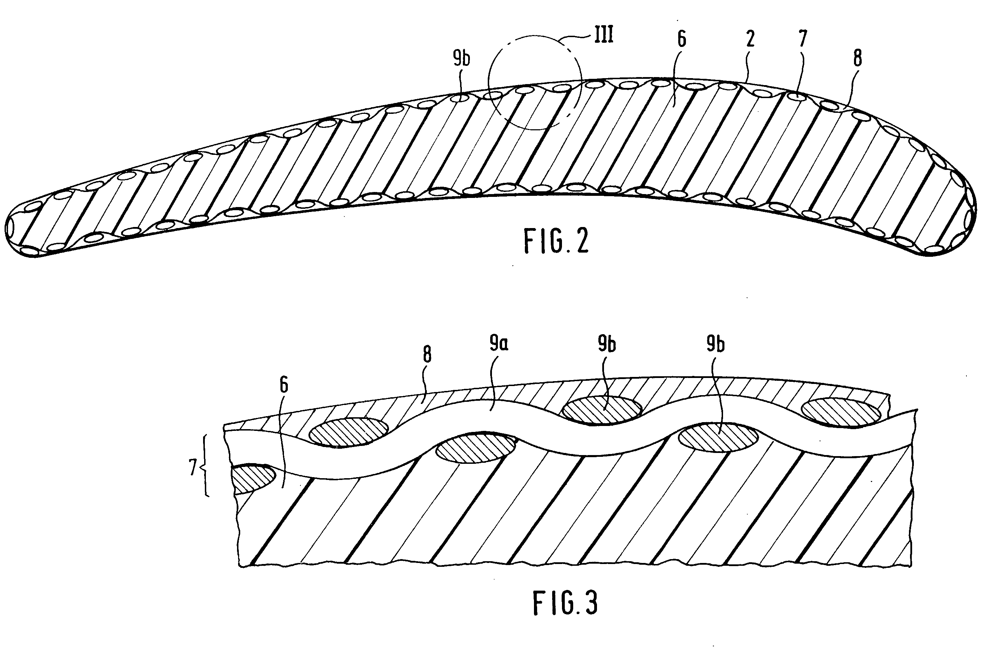

Bei der in Fig. 1 gezeigten Schaufel 1 handelt es sich um eine verstellbare Leitschaufel für den Verdichter einer nicht weiter dargestellten Strömungsmaschine. Die durchgehend als Schichtkörper ausgeführte Schaufel 1 weist ein Schaufelblatt 2 sowie zwei einander an den Rändern 3 des Schaufelblattes 2 gegenüberliegende Lagerzapfen 4 auf. Einer der beiden Lagerzapfen 4 ist als abgewinkelter Verstellhebel 5 ebenfalls in Schichtbauweise ausgebildet. Wie auch in den Fig. 2 und 3 ersichtlich, wird der Schichtkörper innen mit Schichten aus faserverstärktem Kunststoff - Grundschichten 6 genannt - und aus einer an der Oberfläche vollflächig aufgebrachten metallischen Deckschicht 7 gebildet. Ferner ist der Schichtkörper zur Ergänzung des Erosionsschutzes mit einer zusätzlichen Schutzschicht 8 überzogen, wie dies Fig. 3 verdeutlicht. Indem die Schutzschicht 8 Vertiefungen in der Deckschicht 7 ausfüllt, verbessert diese zu einer sehr glatten Oberfläche.

Die Deckschicht 7 des Schichtkörpers der in Fig. 1 gezeigten Ausführungsform wird von einem Filz aus Nickelfasern mit einer Porosität von etwa 95% gebildet. Unter der Deckschicht 7 liegen die Grundschichten 6 aus kohlefaserverstärktem Kunststoff. Als Matrix für den Schichtkörper dient sowohl für die Deck- als auch für die Grundschicht 7 bzw. 6 ein Epoxydharz als Kunstharzbindemittel, so dass sich ein intensiver und haftfähiger Verbund mit weitgehend homogenem Dehnungsverhalten ergibt. Eine weitere Erhöhung der Erosionsbeständigkeit wird durch die Beigabe feinverteilter Partikel aus einer Metalloxidverbindung in die Schutzschicht 8 erzielt.

Die Herstellung eine Schaufel 1 nach der ersten oder zweiten Ausführungsform erfolgt nach folgendem Beispiel:

In eine Bauteilform werden die Grund- und Deckschichten lagenweise abgelegt, wobei die Deckschichten oberflächenseitig zum Liegen kommt. Der Schichtkörper wird dann in seiner Bauteilform eingeschlossen, mit einem Phenolharz durchtränkt und schließlich ausgehärtet. Im Anschluß daran werden die obersten Fasern bzw. Fäden der Deckschicht durch Partikelstrahlen freigelegt und gleichzeitig die Oberfläche aufgerauht. Schließlich wird auf den derart vorbereiteten Schichtkörper eine Schutzschicht mit fein verteilten Metallpartikeln mittels Flammspritzverfahren aufgebracht.

Die Reparatur einer beispielsweise durch Erosion beschädigten Schaufel erfolgt, indem die obersten Faserschichten des Schichtkörpers im Bereich der erosionsgefährdeten Stellen mittels Partikelstrahlen freigelegt werden. Daraufhin wird eine Deckschicht aus metallischen Fasern oder Fäden aufgetragen, wobei es sich hier um eine mit Kunstharz vorgetränkte Struktur handeln kann. Der derart vorbehandelte, in einer Form liegende Schichtkörper wird dann mittels Druck und Wärmebehandlung ausgehärtet. Gegebenenfalls wird beim Freilegen der Faserschichten eine oder mehrere Faserschichten abgetragen, um eine strömungsmechanisch ungewünschte Aufdickung des Schaufelblattes 2 zu vermeiden.

## Patentansprüche

1. Schaufel für eine Strömungsmaschine, bei welcher zumindest ein der Strömung ausgesetztes Schaufelblatt (2) als Schichtkörper mit Schichten (6) aus faserverstärktem Kunststoff und mit zumindest einer an der Oberfläche teil- oder vollflächig aufgebrachten metallischen Deckschicht (7) als Erosionsschutz ausgeführt ist, **dadurch gekennzeichnet, dass** die Deckschicht (7) von einem Filz aus metallischen Fasern oder Fäden (9a,b) gebildet wird, der mit dem faserverstärkten Kunststoff der angrenzenden Schichten (6) über das gleiche Kunstharzmittel verbunden ist, wie die Schichten (6) miteinander.

2. Schaufel nach Anspruch 1, **dadurch gekennzeichnet, dass** die Deckschicht aus einem Filz aus Stahl- oder Nickelfasern aufgebaut ist.

3. Schaufel nach Anspruch 1 oder 2, **dadurch gekennzeichnet, dass** die Fasern oder Fäden (9a,b) der Deckschicht (7) mit den Fasern des faserverstärkten Kunststoffes (6) durch Weben, Knüpfen, Flechten oder ähnlichem verbunden sind.

4. Schaufel nach einem der vorhergehenden Ansprüche, **dadurch gekennzeichnet, dass** der Durchmesser der metallischen Fasern oder Fäden zwischen 2 und 22 µm liegt.

5. Schaufel nach einem der vorhergehenden Ansprüche, **dadurch gekennzeichnet, dass** die Deckschicht (7) eine Dicke von ungefähr 0,05 mm bis 3 mm aufweist.

6. Schaufel nach einem der vorhergehenden Ansprüche, **dadurch gekennzeichnet, dass** das gemeinsame Kunstharzmittel der Deckschicht (7) und der Schichten (6) aus faserverstärktem Kunststoff Mischpolymerisate aus Kunststoffharz, insbesondere Epoxy-, Phenolharze oder Polyimide enthält.

7. Schaufel nach einem der vorhergehenden Ansprüche, **dadurch gekennzeichnet, dass** das Schaufelblatt (2) teil- oder vollflächig mit einer zusätzlichen erosionsbeständigen Schutzschicht (8) überzogen ist.

8. Schaufel nach Anspruch 7, **dadurch gekennzeichnet, dass** die Schutzschicht (8) ein temperaturbeständiger Lack ist.

9. Schaufel nach Anspruch 7, **dadurch gekennzeichnet, dass** die Schutzschicht (8) von einer thermoplastischen Folie gebildet wird.

10. Verfahren zur Herstellung einer Schaufel nach einem der vorhergehenden Ansprüche, **gekennzeichnet durch** folgende Verfahrensschritte:
- lagenweises Ablegen der Grund- und Deckschicht in eine Bauteilform, wobei die Deckschicht oberflächenseitig gelegt wird,
- Durchtränken der Schichten mit einem Kunstharz,
- Aushärten des Schichtkörpers,
- Freilegen der obersten metallischen Fasern bzw. Fäden und
- Aufbringen der Schutzschicht auf die freigelegten Fäden bzw. Fasern der Deckschicht

11. Verfahren nach Anspruch 10, **dadurch gekennzeichnet, dass** das Freilegen der obersten Fasern bzw. Fäden durch Partikelstrahlen erfolgt.

12. Verfahren zur Reparatur einer Schaufel einer Strömungsmaschine, bei der zumindest das der Strömung ausgesetzte Schaufelblatt als Schichtkörper mit faserverstärktem Kunststoff ausgeführt ist, **gekennzeichnet durch** folgende Verfahrensschritte:
- teil- oder vollflächiges Freilegen der obersten Faserschichten des Schichtkörpers und Aufrauhung der Oberfläche,
- Auftragen zumindest einer Deckschicht aus einem Filz aus metallischen Fasern oder Fäden und
- Verbinden der mit einem Kunstharz getränkten Schichten des in einer Form liegenden Schichtkörpers mittels Druck und Wärmebehandlung

13. Verfahren nach Anspruch 12, **dadurch gekennzeichnet, dass** die Deckschicht mit Kunstharz vorgetränkt ist.

14. Verfahren nach Anspruch 12 oder 13, **dadurch gekennzeichnet, dass** vor oder mit dem Freilegen der obersten Faserschicht eine mechanische Beseitigung von erosionsbedingten Schadstellen erfolgt.

## Claims

1. Blade for a flow device, wherein at least one paddle (2) exposed to the flow is formed as a layered body with layers (6) of fibre reinforced synthetic material and with at least one metal covering layer (7) by way of anti-erosion protection mounted partly or fully on the surface, **characterised in that** the covering layer (7) is formed from a felt made from metal fibres or threads (9a, b), which is connected with the fibre reinforced synthetic material of the neighbouring layers (6) by means of the same synthetic resin as the layers (6) with each other.

2. Blade for a flow device according to Claim 1 **characterised in that** the covering layer is constructed from a felt made from steel or nickel fibres.

3. Blade according to Claim 1 or 2 **characterised in that** the fibres or threads (9a, b) of the covering layer (7) are connected with the fibres of the fibre reinforced synthetic material (6) by means of weaving, meshing, braiding or similar.

4. Blade according to one of the preceding claims **characterised in that** the diameter of the metal fibres or threads lies between 2 and 22 µm.

5. Blade according to one of the preceding claims **characterised in that** the covering layer (7) has a thickness of around 0.05 to 3 mm.

6. Blade according to one of the preceding claims **characterised in that** the overall synthetic resin of the covering layer (7) and of the layers (6) made of fibre reinforced synthetic material contains copolymers made from synthetic resin, in particular epoxy resin, phenolic resin and polyimides.

7. Blade according to one of the preceding claims **characterised in that** the paddle (2) is coated on part of its surface or all of its surface with an additional erosion-resistant protective layer (8).

8. Blade according to Claim 7 **characterised in that** the protective layer (8) is a temperature-resistant paint.

9. Blade according to Claim 7 **characterised in that** the protective layer (8) is formed by a thermo-plastic film.

10. Method of producing a blade according to one of the preceding claims, **characterised by** the following steps:
- layer-oriented depositing of the base layer and covering layer into a component a form wherein the covering layer is placed on the upper surface side,
- soaking of the layers with a synthetic resin,
- maturing of the layered structure,
- exposure of the uppermost metal fibres or threads and
- application of the protective layer on the exposed threads or fibres of the covering layer.

11. Method according to Claim 10 **characterised in that** the exposure of the uppermost fibres or threads takes place through particle dispersion.

12. Method of repairing a blade of a flow device, wherein at least the paddle exposed to the flow is formed as a layered structure with fibre reinforced synthetic material, **characterised by** the following steps:
- partial surface or entire surface exposure of the uppermost fibre layers of the layered structure and roughening of the upper surface,
- application of at least one covering layer made from a felt made from metal fibres or threads and
- connection of the layered structure lying in a form soaked with a synthetic resin by means of pressure and heat processing.

13. Method according to Claim 12 **characterised in that** the covering layer is previously soaked with synthetic resin.

14. Method according to Claim 12 or 13 **characterised in that** before or with the exposure of the uppermost fibre layer, mechanical removal of erosion-related damage points is effected.

## Revendications

1. Aube pour une turbomachine, dans laquelle au moins une lame (2) de l'aube soumise à l'écoulement est réalisée sous la forme d'un corps stratifié comportant des couches (6) formées d'une matière plastique renforcée par des fibres, et au moins une couche métallique de revêtement (7) disposée sur une partie ou la totalité de la surface et fournissant une protection contre l'érosion, **caractérisée en ce que** la couche de revêtement (7) est formée d'un feutre formé de fibres ou de fils métalliques (9a,b), qui est relié à la matière plastique renforcée par des fibres des couches contiguës (6), au moyen du même matériau formé d'une résine synthétique, que les couches (6).

2. Aube selon la revendication 1, **caractérisée en ce que** la couche de revêtement est constituée par un feutre formé de fibres d'acier ou de nickel.

3. Aube selon la revendication 1 ou 2, **caractérisée en ce que** les fibres ou les fils (9a,b) de la couche de revêtement (16) sont reliés aux fibres de la matière plastique (6) renforcée par des fibres, par tissage, nouage, tressage ou analogue.

4. Aube selon l'une des revendications précédentes, **caractérisée en ce que** le diamètre des fibres ou des fils métalliques est compris entre 2 et 22 *µ*m.

5. Aube selon l'une des revendications précédentes, **caractérisée en ce que** la couche de revêtement (7) possède une épaisseur comprise entre environ 0,05 mm et 3 mm.

6. Aube selon l'une des revendications précédentes, **caractérisée en ce que** le moyen commun formé de résine synthétique de la couche de revêtement (7) et des couches (6) et constitué par une matière plastique renforcée de fibres contient des polymérisants mixtes d'une résine plastique, notamment d'une résine époxy, de résines phénoliques ou de polyimides.

7. Aube selon l'une des revendications précédentes, **caractérisée en ce que** la lame (2) de l'aube est recouverte sur une partie ou sur la totalité de sa surface par une couche de revêtement supplémentaire (8), qui résiste à l'érosion.

8. Aube selon la revendication 7, **caractérisée en ce que** la couche de protection (8) est une laque résistante à la température.

9. Aube selon la revendication 7, **caractérisée en ce que** la couche de protection (8) est formée par une feuille thermoplastique.

10. Procédé pour fabriquer une aube selon l'une des revendications précédentes, **caractérisé par** les étapes opératoires suivantes :
- dépôt de la couche de base et de la couche de revêtement sous la forme d'une nappe dans un moule à composant, la couche de revêtement étant placée du côté de la surface,
- imprégnation des couches avec une résine synthétique,
- durcissement du corps formé de couches,
- mise à nu des fibres ou des fils métalliques les plus élevés, et
- application de la couche de protection sur les fils ou fibres mis à nu de la couche de revêtement.

11. Procédé selon la revendication 10, **caractérisé en ce que** la mise à nu des fibres ou fils les plus élevés s'effectue à l'aide de faisceaux de particules.

12. Procédé pour réparer l'aube d'une turbomachine, selon lequel au moins la lame de l'aube soumise à l'écoulement est agencée sous la forme d'un corps formé de couches et comprenant une matière plastique renforcée par des fibres, **caractérisé par** les étapes consistant à :
- mettre à nu sur une partie ou la totalité de la surface, des couches les plus élevées de fibres du corps de couches et rendre rugueuse la surface,
- déposer au moins une couche de revêtement formée d'un feutre constitué de fibres ou de fils métalliques; et
- relier les couches imprégnées d'une résine synthétique du corps multicouches disposé dans un moule, au moyen d'une pression et d'un traitement thermique.

13. Procédé selon la revendication 12, **caractérisé en ce que** la couche de revêtement est préimprégnée d'une résine synthétique.

14. Procédé selon la revendication 12 ou 13, **caractérisé en ce qu'**une limitation mécanique d'emplacements de défauts dûs à l'érosion est réalisée avant ou lors de la mise à nu de la couche de fibres la plus élevée.
